Europäisches Patentamt

(19) European Patent Office

Office européen des brevets

(11) Publication number: **0 139 001**
**B1**

# EUROPEAN PATENT SPECIFICATION

(45) Date of publication of the patent specification:
15.07.87

(51) Int. Cl.⁴: **F 01 K 21/06**, C 02 F 1/42,
**B 01 J 47/04**

(21) Application number: **84901845.2**

(22) Date of filing: **06.04.84**

(86) International application number:
**PCT/US 84/00529**

(87) International publication number:
**WO 84/04132 (25.10.84** Gazette **84/25)**

(54) **BOILER INSTALLATION.**

(30) Priority: **08.04.83 US 483436**

(43) Date of publication of application:
**02.05.85 Bulletin 85/18**

(45) Publication of the grant of the patent:
**15.07.87 Bulletin 87/29**

(84) Designated Contracting States:
**CH DE FR GB LI SE**

(56) References cited:
**DE - B - 1 075 509**
**DE - B - 1 258 807**
**FR - A - 1 351 335**
**GB - A - 768 310**
**GB - A - 787 099**
**NL - A - 6 405 199**
**US - A - 3 336 747**
**US - A - 4 054 174**

(73) Proprietor: **SOLAR TURBINES INCORPORATED,
2200 Pacific Highway P.O. Box 80966, San Diego
California 92138 (US)**

(72) Inventor: **DUFFY, Thomas, E., 2226 Illion Street, San
Diego, CA 92110 (US)**

(74) Representative: **Jackson, Peter Arthur et al, GILL
JENNINGS & EVERY 53-64 Chancery Lane, London
WC2A 1HN (GB)**

## Description

This invention relates to boiler installations having systems for chemically treating the boiler feedwater.

US-A-3 312 616 discloses a boiler installation including a boiler; a condenser for condensing steam raised in the boiler; means for supplying to the boiler feedwater comprising condensate recovered from the condenser and make-up water; and means comprising demineralizer units for chemically treating the condensate and make-up water for removing dissolved solids from the feedwater. Such an installation is hereinafter referred to as of the kind described. In the particular arrangement described, dissolved oxygen is removed by ion exchange units upon start up before steam is available for operating a deaerator.

DE-B-1 258 807 discloses a steam turbine in which part of the condensate is treated in an ion exchange unit which is regenerated by softened water which may be part of make-up water.

GB-A-768 310 discloses a boiler installation in which make-up water is passed through demineralizer units for the removal of dissolved solids and gases.

According to the invention, a boiler installation of the kind described is characterised in that the chemical treatment means comprises solely demineralizer units for removing dissolved solids from the feedwater, and means for recirculating the make-up water through the respective units; and in that those components of the boiler which are contacted by steam and water are fabricated of corrosion resistant material.

It has been found that fabricating the components of once through type boilers which are wettable by water and steam of a stainless steel or other corrosion resistant material eliminates the complex chemical and/or mechanical treatment required in a convenient boiler installation to control pH and dissolved oxygen in the feedwater, reducing maintenance and operating costs and making automated operation more feasible. Also, the possibility of operator error and consequent damage to the boiler and any associated steam turbine are eliminated.

The possibility of recirculating the make-up water through the respective demineralizer units, preferably a single train of demineralizer units having serially disposed beds of anionic resin, a cationic resin, and a mixed bed composed of essentially equimolar parts of anionic and cationic resins, ensures that the make-up water is as pure as the treated condensate.

An example of a powerplant incorporating a boiler installation in accordance with the invention is illustrated in the accompanying drawings, in which:

· Figure 1 is a schematic view of a combined cycle power plant which has a once-through boiler;

Figure 2 shows, in more detail but still schematically, the feedwater chemical treatment system; and

Figure 3 is partially sectioned side view of one of certain demineralizer units employed in the feedwater chemical treatment system.

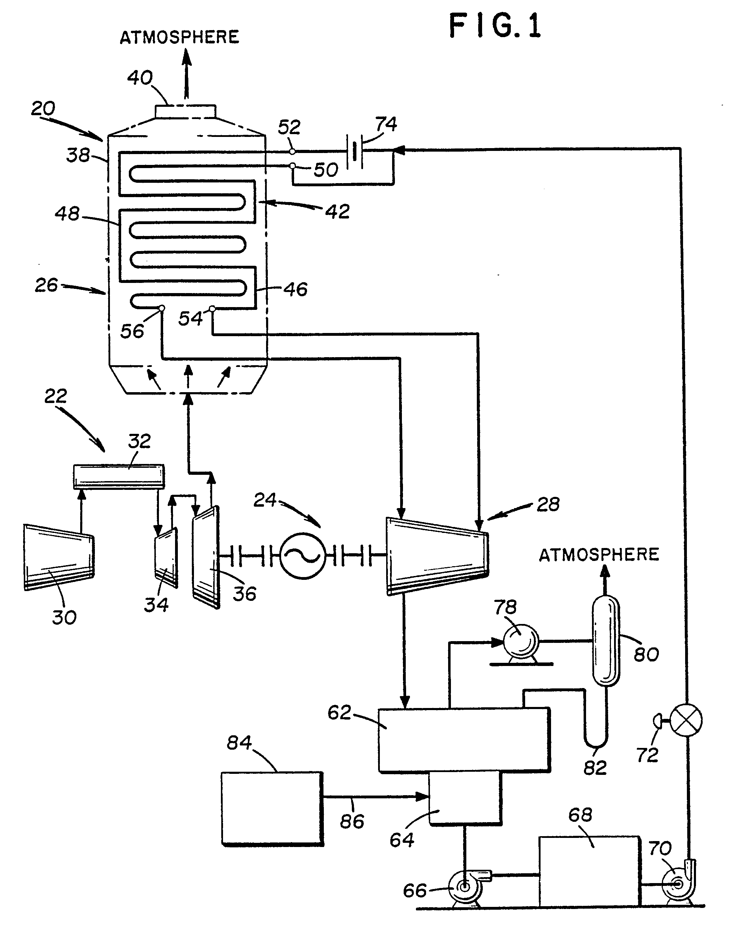

Figure 1 depicts a combined cycle power plant 20 which includes a steam generating system. For the most part, the components of power plant 20 are of conventional or otherwise familiar construction. Those components will be described herein only to the extent necessary for an understanding of the present invention.

The major components of power plant 20 include a gas turbine engine 22 drive connected to an alternator 24, a boiler 26 in which steam is generated by thermal energy recovered from the hot gases exhausted from gas turbine engine 22, and a steam turbine 28 also drive connected to alternator 24 and employing the steam in boiler 26 as a motive fluid.

In power plant 20, steam turbine 28 also drives the exemplary load of alternator 24. However, it can equally well be employed to drive a load which is different from the load being driven by gas turbine engine 22.

The illustrated gas turbine is of conventional configuration; it includes a compressor 30, a combustor 32, and a gas producer turbine 34 for driving compressor 30, and a power turbine 36. Hot gases exhausted from power turbine 36 at a temperature in the range of 427-482°C are ducted to, and flow through, the casing 38 of steam generator 26. Normally, these gases will be exhausted to atmosphere through stack 40 at a temperature on the order of 112°C. The heat thus recovered in steam generator 26 is 21-25% higher than can be recovered in the unfired boilers heretofore employed in combined cycle power plants.

The boiler 26 illustrated in Figure 1 has a once-through, dual pressure configuration. It includes a steam generating module 42, which in one actual boiler design, is made up of forty steam generating circuit assemblies each including a high pressure tube 46 and a low pressure tube 48. In each of these tubes a phase change of water to saturated steam and a change from saturated steam to superheated steam occurs in a continuous flow path extending from the inlet 50 (or 52) to the outlet 54 (or 56) of the tube as the water flows downwardly through the tube in efficient, counterflow relationship to the flow of the hot gas turbine engine exhaust gases. Thus, different regions in each tube function as a feedwater heater, as a vaporizer, and as a superheater.

High pressure steam generated in tubes 46 of boiler 26 flows into the high pressure section of dual pressure steam turbine engine 28, and low pressure steam flows into the low pressure section of the turbine. This turbine may be of any desired construction.

A number of desirable attributes such as reduced maintenance and operating costs, simplification of automatic operation, and elimination of possibilities for operator error are obtained by the use of corrosion resistant materials in boiler 26, thereby eliminating the need for complex equipment for controlling the pH and for chemically and/or mechanically controlling the dissolved oxygen content of the boiler feedwater. To this end, tubes 46 and 48 are made of such a material, typically a nickel-chromium-iron containing, high temperature and corrosion resistant alloy or a stainless steel.

Steam exhausted from turbine 28 flows into a conventional condensor 62 where the steam is condensed. This component may be, for example, a water or air cooled condensor of conventional design.

Condensate accumulates in hot well 64 which contains the small inventory of feedwater needed for boiler 26.

That only a small inventory of feedwater is needed to operate boiler 26 is of considerable practical importance. The large mass of saturated water contained in the drums of a conventional boiler, and eliminated in the novel boilers disclosed herein, is a safety hazard and has produced widespread legislation requiring attended operation of steam boilers. By eliminating this large mass of saturated water, the requirement for attended operation can also be eliminated. This is cost effective and, also, permits remote, unattended operation of combined cycle power plant 20.

From hot well 64, the condensed steam is circulated by condensate pump 66 to a condensate polisher 68. Here, dissolved solids are removed from the condensate which is then pumped to steam generator 26 by feedwater pump 70 through a flow control valve 72. This valve matches the feedwater flow rate to the enthalpy in the hot gases supplied to the steam generator from gas turbine engine 22. A fixed orifice 74 on the upstream side of the inlets 50 and 52 to steam generating tubes 46 and 48 splits the feedwater in proper proportions between the high pressure tubes 46 and the low pressure tubes 48.

As indicated above, it has unexpectedly been found that the fabrication of those boiler components wetted by aqueous fluids of corrosion resistant material eliminates the need for chemically removing dissolved oxygen from the feedwater supplied to boiler 26 or for controlling the pH of the feedwater. Instead, physical removal of dissolved oxygen by hot well deaeration has been found adequate to prevent corrosion of the boiler components even without pH control.

Hot well deaeration is effected by a vacuum pump 78 connected to hot well 64 through condensor 62. Oxygen evacuated from the hot well and condensor by the vacuum pump typically contains appreciable amounts of entrained water. Consequently, the evacuated air 78 is pumped into a conventional separator 80. Air is discharged from separator 80 to atmosphere, and water is returned through trap 82 from separator 80 to condensor 62.

One of the important advantages of the steam generators disclosed herein and discussed above is that the requirement for make-up of feedwater is nominal. For example, one boiler of the type disclosed herein is planned to produce 6,998 kilograms of steam per hour at one exemplary design point. Make-up water requirements for this boiler are less than 2.4 liters per hour. In contrast, make-up water requirements for a conventional blowdown boiler of comparable capacity are about 170 liters per hour.

Such make-up water as is required is first circulated through a demineralizer 84 to remove dissolved and suspended solids from the water and then supplied to hot well 64 through make-up water line 86.

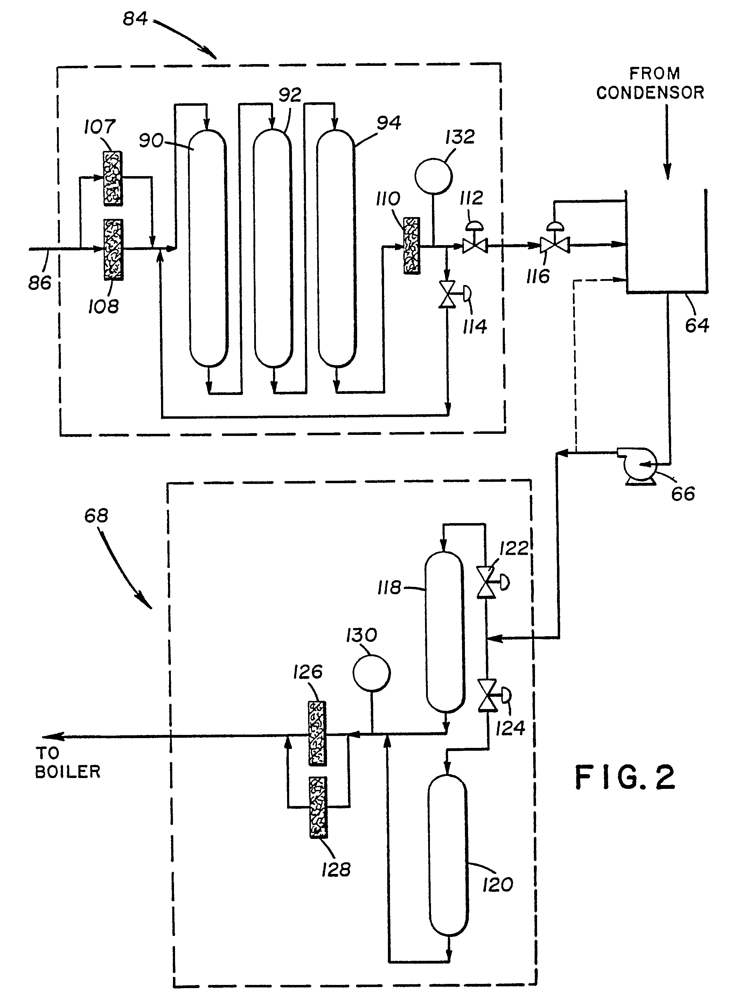

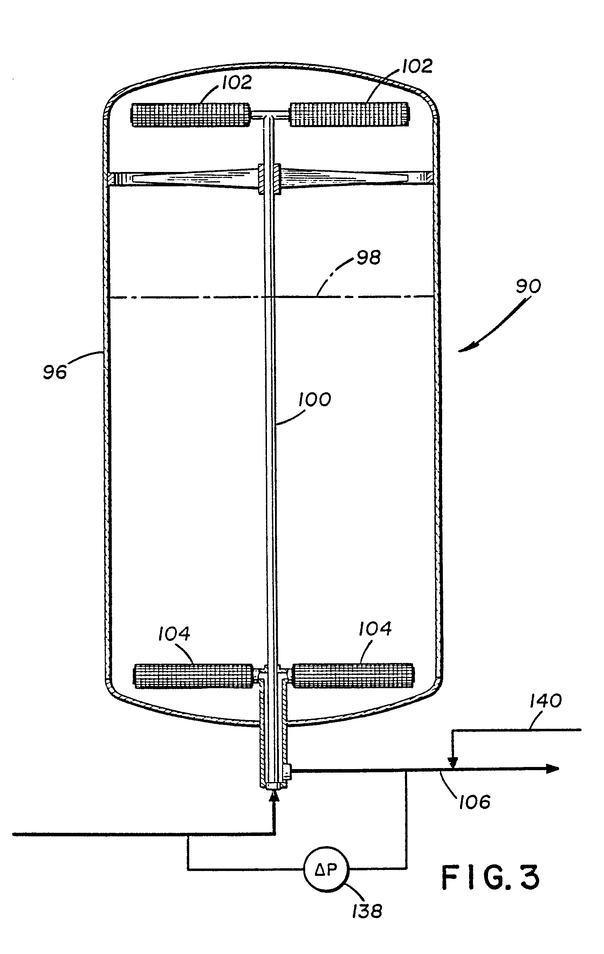

Referring still to the drawing, Figures 2 and 3 show in more detail the demineralizer 84 employed to remove excessive contaminants from make-up water and the polisher 68 utilized to remove dissolved corrosion products from the condensate supplied to boiler 26 from hot well 64.

Make-up water demineralizer 84 includes a single train of demineralizer units 90, 92, and 94 containing, respectively, deep beds of a strong acid anion exchange resin, a strong base cation exchange resin, and a mixture of the cation and anion exchange resins. The cation resin exchanges hydrogen ions for dissolved catoinic impurities such as sodium, calcium, and iron; and the anion resin exchanges hydroxyl ions for dissolved anionic impurities such as chlorides, silicates, and carbonates. Suitable resins are available from the Graver Water Conditioning Company.

The three demineralization units 90, 92, and 94 may be identical except for the resins they contain. Unit 90, shown in more detail in Figure 3, includes a vertically oriented, cylindrical tank 96 housing a bed of resin 98. Make-up water supplied to unit 90 flows upwardly through line 100 and is discharged into the tank through screened distributors 102 arranged in a radial pattern in tank 96. After percolating down through ion exchange resin bed 98, the now demineralized water flows through screened lateral outlets 104 into a line 106 communicating with either the next demineralizing unit or, in the case of terminal unit 94, with hot well 64.

Referring again to Figure 2, filters 107 and 108, preferably of the stainless steel type, are located upstream from the first unit 90 in demineralizer 84. These filters are utilized to remove suspended solids, primarily silicas, from the make-up water. The two filters are connected in parallel so that the flow of make-up water to the demineralizer units can be continued through one filter while the other is being cleaned, replaced, etc.

A third filter 110 is located on the downstream side of terminal demineralizer unit 94. This filter, preferably of the same construction as filters 107 and 108, is employed to remove from the demineralized make-up water any particles of ion exchange resin which may have been entrained in it during the passage of the make-up water through demineralize units 90, 92, and 94.

In aggravated circumstances, one pass of the make-up water through demineralizer 84 may not suffice to reduce the dissolved solids content of that water to the wanted level. Valves 112 and 114 are consequently provided so that the make-up water can be recirculated, totally, or in part, through demineralizer units 90, 92, and 94 to further reduce the dissolved solids content of the make-up water.

A conventional level controller 116 responsive to the condensate level in hot well 64 is utilized to regulate, overall, the flow of make-up water through demineralizer 84 to the hot well.

Referring still to Figure 2, condensate polisher 68 includes two demineralizer units 118 and 120 which may be of the same construction as units 90, 92, and 94. Both of these units, which are connected in parallel between hot well 64 and boiler 26, contain mixed beds of ion exchange resins like that in unit 94.

Valves 122 and 124 allow the condensate discharged from condensate pump 66 to be circulated alternately to units 118 and 120. Consequently, one of these two units is always available, allowing the ion exchange resin in the other of these two units to be replaced or regenerated without shutting down the steam generating system.

Downstream of demineralizer units 118 and 120 are paralleled filters 126 and 128 which may be of the same characters as filters 107 ... 110. One and then the other of these filters is employed to remove from the feedwater supplied to boiler 26 any particles of resin that may have become entrained therein during the passage of the feedwater through demineralizer unit 118 or unit 120.

Successful protection of the water and steam wetted boiler components against corrosion requires that the feedwater supplied to boiler 26 be freed of dissolved solids to the extent that the feedwater has a pH in the range of 6.0 to 7.0. This is accomplished by maintaining the specific conductivity of the feedwater supplied to boiler 26 at leas than 1.0 µho/cm during normal operation. If the feedwater conductivity goes above 1.0 µho/cm for more than a limited period of time, the resin in one of the two parallel demineralizer units 118 and 120 and/or that in the three serially arranged demineralizer units 90, 92, and 94 must be replaced. Feedwater conductivity levels exceeding 5.0 µho/cm require that the steam generating system be shut down immediately and that clean-up procedures be initiated to prevent corrosion of the water and steam wetted components.

Conductivity probes 130 and 132 are provided on the downstream side of condensate polisher units 118 and 120 and on the downstream side of the terminal demineralizer unit 94 in make-up water demineralizer 84 to monitor the conductivity of the make-up water and feedwater and, indirectly, the efficacy of the ion exchange resins in the demineralizer units.

Probe 132 can be used to control the recirculation of make-up water through demineralizer 84, insuring that the dissolved solids content of the make-up water has been reduced to an acceptable level before the water is allowed to flow to hot well 64.

Probe 130 monitors the specific conductivity of the feedwater supplied to boiler 26 and can be used to automatically switch the effluent from condensate pump 66 from the operating condensate polishing unit 118 or 120 to the standby unit when the specific conductivity of the feedwater reaches a level indicating that the bed of ion exchange resin in the operating unit is becoming exhausted.

Also, a differential pressure sensor 138 is connected across each of the demineralizing units 90, 92, 94, 118, and 120. These sensors monitor the pressure drop across the ion exchange resin beds which are gradually compressed by the hydraulic forces of flow through the bed. The resulting decrease in void space in the bed causes an increase in the pressure drop across it, ultimately to the point at which condensate pump 66 can not supply feedwater pump 70 with water at sufficient flow rate and pressure. When the differential pressure sensor indicates that this condition is occurring, it can be remedied by injecting air into the demineralizer outlet line through air line 140 at sufficient velocity to stir up the resin bed and increase its void space.

## Claims

1. A boiler installation including a boiler (26); a condenser (62) for condensing steam raised in the boiler; means (84, 86, 64, 66, 68, 70) for supplying to the boiler feedwater comprising condensate recovered from the condenser and make-up water; and means (84, 68) comprising demineralizer units (90, 92, 94, 118, 120) for chemically treating the condensate and make-up water for removing dissolved solids from the feedwater; characterised in that the chemical treatment means (84, 68) comprises solely demineralizer units (90, 92, 94, 118, 120) for removing dissolved solids from the feedwater, and means (112, 114) for recirculating the make-up water through the respective units (90, 92, 94); and in that those components of the boiler which are contacted by steam and water are fabricated of corrosion resistant material.

2. An installation according to claim 1, wherein the means (84) for removing dissolved solids from the make-up water comprises a single train of demineralizer units having serially disposed beds of anionic resin (90), a cationic resin (92), and a mixed bed composed of essentially equimolar parts of anionic and cationic resins.

3. An installation according to claim 1 or claim 2, wherein the means (68) for removing dissolved solids from the condensate comprises two mixed beds demineralizer units, each composed of essentially equimolar parts of anionic and cationic resins, and means (122, 124) for alternately routing the condensate through one and the other of the beds.

4. An installation according to any one of the preceding claims, including vacuum deareation means (78, 80) for removing dissolved gases from the feedwater.

5. An installation according to any one of the preceding claims, including filter means (110) on the downstream side of the chemical treating means (90, 92, 94) for removing from the feedwater any solids entrained therein during the passage of the feedwater through the chemical treating means (90, 92, 94).

## Patentansprüche

1. Kesselanlage mit einem Kessel (26), einem Kondensator (62) zum Kondensieren von im Kessel erzeugtem Dampf, Mitteln (84, 86, 64, 66, 68, 70) zur Lieferung von Kesselspeisewasser einschliesslich Kondensat, wiedergewonnen aus dem Kondensator und Ergänzungswasser und mit Mitteln (84, 68), die Entmineralisiereinheiten (90, 92, 94, 118, 120) aufweisen, um das Kondensat und Ergänzungswasser chemisch zu behandeln, und zwar zum Zwecke der Entfernung aufgelöster Feststoffe aus dem Speisewasser, dadurch gekennzeichnet dass die chemischen Behandlungsmittel (84, 68) allein Entmineralisiereinheiten (90, 92, 94, 118, 120) zur Entfernung von aufgelösten Feststoffen aus dem Speisewasser aufweisen und Mittel (112, 114) zur Rezirkulation des Ergänzungswassers durch die entsprechenden Einheiten (90, 92, 94), und ferner dadurch gekennzeichnet, dass diejenigen Komponenten des Kessels, die durch Dampf und Wasser kontaktiert werden, aus korrosionsbeständigem Material hergestellt sind.

2. Anlage nach Anspruch 1, wobei die Mittel (84) zur Entfernung von ausgelösten Feststoffen aus dem Ergänzungswasser eine einzige Folge von Entmineralisiereinheiten mit in Serie angeordneten Betten aus anionischem Harz (90), einem kationischen Harz (92) und einem gemischten Bett, zusammengesetzt aus im wesentlichen äquimolaren Teilen von anionischen und kationischen Harzen aufweisen.

3. Anlage nach Anspruch 1 oder 2, wobei die Mittel (68) zur Entfernung von aufgelösten Feststoffen aus dem Kondensat zwei Mischbett-Entmineralisiereinheiten aufweisen, wobei jede aus im wesentlichen äquimolaren Teilen anionischer und kationischer Harze zusammengesetzt ist und mit Mitteln (122, 124) zur alternativen Leitung des Kondensats durch das eine oder andere der Betten.

4. Anlage nach einem der vorhergehenden Ansprüche mit Vakuumentlüftungsmitteln (78, 80) zur Entfernung aufgelöster Gase aus dem Speisewasser.

5. Anlage nach einem der vorhergehenden Ansprüche mit Filtermitteln (110) auf der stromabwärts gelegenen Seite der chemischen Behandlungsmittel (90, 92, 94) zur Entfernung jedweder vom Speisewasser mitgeführter Feststoffe aus dem Speisewasser, und zwar während des Durchgangs des Speisewassers durch die chemischen Behandlungsmittel (90, 92, 94).

## Revendications

1. Installation à chaudière comprenant une chaudière (26), un condenseur (62) déstiné à condenser la vapeur produite dans la chaudière, des moyens (84, 86, 64, 66, 68, 70) destinés à fournir à la chaudière de l'eau d'alimentation comprenant les condensats recueillis à la sortie du condenseur et de l'eau d'apport, et des moyens (84, 68) comprenant des unités de déminéralisation (90, 92, 94, 118, 120) permettant de traiter les condensats et l'eau d'apport par voie chimique pour éliminer les solides dissous de l'eau d'alimentation, caractérisée en ce que les moyens de traitement chimique (84, 68) comprennent uniquement des unités de déminéralisation (90, 92, 94, 118, 120) destinées à éliminer les solides dissous dans l'eau d'alimentation, et des moyens (112, 114) pour remettre en circulation l'eau d'apport à travers les unités respectives (90, 92, 94), et en ce que les éléments de la chaudière qui sont au contact de la vapeur et de l'eau sont réalisés en un matériau résistant à la corrosion.

2. Installation selon la revendication 1, dans laquelle les moyens (84) permettant d'éliminer les solides dissous de l'eau d'apport, comprennent une chaîne unique d'unités de déminéralisation renfermant des lits, disposés en série, de résine anionique (90), d'une résine cationique (92), et un lit mixte constitué de parties sensiblement équimolaires de résines anionique et cationique.

3. Installation selon la revendication 1 ou la revendication 2, dans laquelle les moyens (68) pour éliminer les solides dissous des condensats comprennent deux unités de déminéralisation à lits mixtes, chacun constitué de parties sensiblement equimolaires de résines anionique et cationique, et des moyens (122, 124) permettant de diriger les condensats en alternance à travers l'un ou l'autre des lits.

4. Installation selon l'une quelconque des revendications précédentes, comprenant des moyens de déminéralisation par le vide (78, 80), destinés à éliminer les gaz dissous de l'eau d'alimentation.

5. Installation selon l'une quelconque des revendications précédentes, comprenant des moyens filtrants (110) situés à l'aval des moyens de traitement chimique (90, 92, 94) pour éliminer de l'eau d'alimentation, tous les solides entraînés dans celle-ci lors du passage de l'eau d'alimentation à travers les moyens de traitement chimique (90, 92, 94).

# FIG.1

ATMOSPHERE

ATMOSPHERE

FIG. 2

FIG.3